(19) **Europäisches Patentamt European Patent Office Office européen des brevets**

(11)  **EP 2 104 437 B1**

(12)  **FASCICULE DE BREVET EUROPEEN**

(45) Date de publication et mention de la délivrance du brevet:
**26.08.2015  Bulletin 2015/35**

(21) Numéro de dépôt: **07848001.9**

(22) Date de dépôt: **07.12.2007**

(51) Int Cl.:
*A23L 3/3508* (2006.01)

(86) Numéro de dépôt international:
**PCT/EP2007/063555**

(87) Numéro de publication internationale:
**WO 2008/068341 (12.06.2008 Gazette 2008/24)**

(54) **PRODUIT ALIMENTAIRE COMPRENANT DES PROBIOTIQUES ET UN MONOACIDE FAIBLE PROTONÉ**

PROBIOTIKUMHALTIGES NAHRUNGSMITTELPRODUKT UND PROTONIERTE SCHWACHE MONOSÄURE

PROBIOTIC-CONTAINING FOOD PRODUCT AND A PROTONATED WEAK MONOACID

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.12.2006  FR 0610742**

(43) Date de publication de la demande:
**30.09.2009  Bulletin 2009/40**

(73) Titulaire: **Compagnie Gervais Danone**
**75009 Paris (FR)**

(72) Inventeurs:
• **FRANCOIS, Alan**
**91750 Chevannes (FR)**
• **PORTIER, Rémi**
**91360 Epinay-sur-Orge (FR)**
• **CREPEL, Pascal**
**91190 Gif sur Yvette (FR)**
• **FAURIE, Jean-Michel**
**78350 Jouy en Josas (FR)**

(74) Mandataire: **Regimbeau**
**20, rue de Chazelles**
**75847 Paris Cedex 17 (FR)**

(56) Documents cités:
**WO-A1-2006/131569      FR-A1- 2 863 828**
**US-A- 5 587 314**

• **DATABASE FSTA [Online] INTERNATIONAL FOOD INFORMATION SERVICE (IFIS), FRANkFURT-MAIN, DE; 1984, TAKE T: "Studies on the flavour constituents of various foods. XVII. Flavour constituents of a lactic beverage." XP002476197 Database accession no. 84-2-04-p0978 & MEMORIES OF THE FACULTY OF EDUCATION, NIIGATA UNIVERSITY, 1980, Japan**

**Description**

La présente invention concerne un procédé de fabrication d'un produit alimentaire frais à base de jus végétaux et/ou de lait, comprenant une concentration stable en probiotiques vivants qui produisent des faux goûts et/ou du gaz dans la matrice initiale du produit alimentaire contenant de 1 à 20 g/l d'acide lactique protoné et ayant un pH compris entre 3 et 4.

L'ingestion de microorganismes vivants appelés probiotiques, dont certaines souches de bactéries, en particulier celles qui appartiennent au genre *Lactobacillus* sont particulièrement bénéfiques au niveau de la santé. En effet, elles ont fait l'objet de nombreuses études démontrant des effets cliniques préventifs dans des domaines variés (par exemple dans les domaines des manifestations allergiques, des diarrhées infectieuses, des maladies inflammatoires) et sur certaines fonctions physiologiques (par exemple la digestion du lactose, le transit intestinal, l'immunité). Ces probiotiques sont notamment capables de favoriser un bon fonctionnement de la flore intestinale qui est susceptible d'intéresser la population générale. En effet, ces bactéries produisent, entre autres, des bactériocines et de l'acide lactique qui augmentent indirectement la digestibilité des aliments, favorisent le péristaltisme intestinal, et accélèrent l'évacuation des selles. De plus, ces bactéries produisent certaines vitamines du complexe B, et favorisent en général l'absorption des vitamines et minéraux, diminuent le cholestérol sanguin, renforcent le système immunitaire et tapissent les muqueuses intestinales afin de protéger contre l'invasion et les activités des microorganismes nuisibles.

De ce fait, depuis plusieurs années, les industries agroalimentaires tentent d'incorporer de telles bactéries dans leurs produits.

De tels produits additionnés de bactéries sont traditionnellement des produits laitiers mais d'autres produits alimentaires, notamment à base de végétaux et en particulier de fruits, sont intéressants à développer pour le marché de l'industrie agroalimentaire.

Des produits alimentaires à base de fruits et additionnés de bactéries du genre *Lactobacillus* sont déjà connus dans l'état de la technique, par exemple dans la demande de brevet internationale WO 00/70972, et la demande de brevet européen EP 0113055.

Cependant, dans des produits alimentaires à base de fruits additionnés de lactobacilles, on a pu observer une croissance et/ou une activité bactérienne qui induit lors du stockage des produits, une altération de leurs qualités par une production de gaz et de faux-goûts qui les rend impropres à la consommation.

En effet, de nombreux micro-organismes sont, par exemple, capables de décarboxyler des acides cinnamiques substitués tel que l'acide trans-4-hydroxy-3-methoxy-cinnamique (acide férulique) et l'acide trans-4-hydroxy-cinnamique (acide p-coumarique) qui peuvent être présents dans du lait ou des jus végétaux pour former respectivement les deux composés volatils suivants : le 3-methoxy-4-hydroxystyrene (4-vinyl guaiacol) et le 4-hydroxystyrene (4-vinyl phénol). Ces molécules sont responsables de faux-goûts de type «phénolique, fumé, gants, médicinal... ». Les activités acide p-coumarique et acide férulique décarboxylases ont été détectées chez les bactéries du genre *Lactobacillus.* En particulier, les Lactobacilles connus pour ces activités sont les suivants : *L. brevis, L. crispatus, L. fermentum, L. plantarum, L. pentoses, L. paracasei* (Van Beek, S and Priest FG - 2000 - Decarboxylation of subsited cinnamic acids by lactic acid bacteria isolated during malt whisky fermentation - Applied and Environmental Microbiology, 66 (12) : 5322-8). Ainsi, via des voies de biotransformation, des souches de lactobacilles sont capables de générer des faux-goûts à partir d'acides phénoliques.

De plus, de nombreuses souches des genres *Leuconostoc, Streptococcus* et *Lactobacillus* sont également capables de dégrader le malate, le citrate, le pyruvate, le fumarate, le tartrate et le gluconate, qui peuvent être présents dans du lait ou des jus végétaux pour produire du gaz (Hegazi F.Z., Abo-Elnaga I.G., 1980. Dégradation of organic acids by dairy lactic acid bacteria. Mikrobiologie der Landwirtschaft der Technologie und des Umweltschutzes, 135 (3), 212). Ainsi par exemple, des acides organiques tels que l'acide malique ou l'acide citrique, quand ils sont dégradés, à moins que cette assimilation ne s'accompagne d'une trop grande production d'acétate qui génère lui aussi des faux-goûts, ne posent pas cette problématique de génération de goûts désagréables pour le consommateur. Néanmoins, l'assimilation de ces acides organiques par des souches bactériennes produira cette fois du $CO_2$ qui fera gonfler l'emballage du produit. En effet, ces acides organiques sont naturellement métabolisés par certaines espèces de lactobacilles pour produire du pyruvate (le composé central des cycles métaboliques tel que le métabolisme carboné) et du $CO_2$ ; de plus le pyruvate est lui-même sujet à des décarboxylations augmentant d'autant le taux de $CO_2$ produit.

Un produit alimentaire à base de fruits de type boisson ou purée de fruits et comprenant des probiotiques vivants stables aura comme avantage d'apporter au consommateur les bienfaits des fruits et des probiotiques.

Le Plan National Nutrition Santé préconise la consommation minimum de cinq portions de fruits et légumes par jour. Les observations menées par de nombreux scientifiques montrent que consommer plus de fruits et légumes permet notamment de réduire le taux de cholestérol, les apports lipidiques, et de limiter la prévalence de l'obésité chez les enfants.

Un produit alimentaire à base de lait et comprenant des probiotiques vivants stables aura comme avantage d'apporter au consommateur les bienfaits d'un produit laitier et des probiotiques.

Plusieurs études scientifiques suggèrent que les probiotiques peuvent jouer également un rôle de premier plan sur la santé. Chaque souche de probiotique peut offrir des bénéfices santé spécifiques. On peut retrouver parmi ces bénéfices santé : une amélioration du fonctionnement du système digestif et un renforcement des défenses naturelles. Certains probiotiques agissent en absorbant des protéines et d'autres produisent des vitamines. Certains peuvent également produire des composés qui luttent contre la propagation de bactéries pathogènes et peuvent ainsi jouer un rôle dans l'écosystème intestinal.

Il serait souhaitable pour l'industrie agroalimentaire de pouvoir préparer de tels produits alimentaires, sans les problèmes de faux goûts et de gaz, et c'est l'objet de la présente invention.

Les inventeurs ont découvert qu'en additionnant la matrice initiale du produit alimentaire comprenant des probiotiques qui, naturellement, produisent des faux goûts et/ou du gaz dans ladite matrice, avec de l'acide lactique en tant que monoacide faible, dans une zone de pH définie, celui-ci empêchait les probiotiques de produire des faux goûts et/ou du gaz dans le produit alimentaire.

Cependant, les inventeurs ont également montré que seule la forme protonée de l'acide lactique, c'est-à-dire, dans un milieu dont le pH est inférieur au pKa de l'acide lactique en tant que monoacide faible, est efficaces pour empêcher les probiotiques de produire des faux goûts et/ou du gaz dans le produit alimentaire.

Ceux-ci ont pu démontrer qu'un pH compris entre 3 et 4, préférentiellement entre 3,4 et 4, de préférence encore entre 3,4 et 3,7, était nécessaire pour avoir un goût acceptable pour le consommateur, tout en permettant qu'un maximum de l'acide lactique additionné en tant que monoacides faibles soit sous une forme protonée. La présente invention permet notamment de proposer des produits ayant une concentration supérieure à 50% en fruits et comprenant des probiotiques vivants à une concentration stable.

Toutefois, les monoacides faibles étant des acides, l'acide lactique va diminuer le pH d'une matrice initiale déjà acide (telle que des jus de fruits) en dessous de ces valeurs de pH recherchées (entre 3 et 4). De plus, les monoacides faibles ayant tendance à avoir mauvais goût, il n'est pas acceptable de mettre plus de 50g/l d'acide lactique dans un produit alimentaire. C'est pourquoi, la présente invention concerne un procédé de fabrication d'un produit alimentaire frais comprenant une concentration stable en probiotiques vivants qui produisent des faux goûts et/ou du gaz dans la matrice initiale du produit alimentaire caractérisé en ce qu'il contient de 1 à 20 g/l d'acide lactique protoné et en ce qu'il a un pH compris entre 3 et 4, qui comprend entre autres les étapes d'ajustement du pH à un pH cible compris entre 3 et 4 par addition d'un acide ou d'une base alimentaire.

Ce produit alimentaire frais comprenant une concentration stable en probiotiques vivants qui produisent des faux goûts et/ou du gaz dans la matrice initiale du produit alimentaire et caractérisé en ce qu'il contient de 1 à 20 g/l d'acide lactique protoné, et en ce qu'il a un pH compris entre 3 et 4, est conservé à une température comprise entre 0 et 15°C, préférentiellement entre 4 et 10°C.

Un produit alimentaire frais (c'est-à-dire conservé à une température comprise entre 0 et 15°C, préférentiellement entre 4 et 10°C) préféré au sens de la présente invention contient plus de 2,2 g/l et jusqu'à 20 g/l d'acide lactique protoné, et son pH est compris entre 3,4 et 4. Un tel produit présente ainsi une teneur en acide lactique protoné supérieure à 2,2 g/l, avec un maximum à 20 g/l, et un pH supérieur à 3,4, avec une valeur maximale à 4.

De manière préférentielle, cette quantité d'acide lactique protoné, est celle présente dans le produit, à l'issue de sa fabrication.

Par produit alimentaire frais, on entend désigner selon la présente invention un produit alimentaire qui sera conservé entre 0 et 15°C, préférentiellement 4 et 10°C.

On entend généralement par « produit alimentaire frais », des produits conservés entre 4 et 8°C, mais il est connu de l'homme du métier que le réfrigérateur du consommateur est plus généralement à une température comprise entre 4 et 10°C. C'est pourquoi les produits alimentaires sont formulés de manière à pouvoir être conservés à de telles températures (comprises entre 4 et 10°C).

Par probiotique, on entend désigner des microorganismes vivants qui, lorsqu'ils sont ingérés en quantité suffisante, exercent un effet positif sur la santé au-delà des effets nutritionnels traditionnels.

Par probiotiques vivants, on entend désigner, selon la présente invention, des probiotiques dont le taux de survie, après 28 jours, dans un produit alimentaire selon la présente invention est supérieur à 60% et avantageusement supérieur à 80%.

La viabilité des probiotiques est mesurée par des techniques de numération connues de l'homme du métier comme par exemple la numération en masse, la numération en surface, les cellules de Malassez, le comptage direct, la turbidité, la néphélométrie, le comptage électronique, la cytométrie en flux, la fluorescence, l'impédancemétrie, l'analyse d'images.

Par concentration stable, on entend désigner, selon la présente invention, une concentration en probiotiques vivants qui varie d'au plus 50%, préférentiellement 10% sur une durée de 35 jours à partir de l'ajout des probiotiques vivants à la matrice initiale du produit alimentaire, à une température de 10°C.

Selon la présente invention, la concentration en bactérie dans le produit alimentaire est supérieure à $10^5$, préférentiellement supérieure à $10^7$ UFC/ml, encore plus préférentiellement supérieure à $0,5 \cdot 10^8$ UFC/ml. De manière préférée entre toutes, la concentration est comprise entre 0,5 $10^8$ et 1,5 $10^8$ UFC/ml.

Ainsi par exemple à une concentration de départ dans le produit alimentaire selon la présente invention de $10^8$ UFC/ml, une concentration stable serait comprise entre 0,5 $10^8$ UFC/ml et 1,5 $10^8$ UFC/ml, préférentiellement 0.9 $10^8$ UFC/ml et 1,1 $10^8$ UFC/ml.

En particulier, ces probiotiques peuvent être des souches bactériennes.

Par souches bactériennes, on entend désigner préférentiellement, selon la présente invention, des bactéries lactiques, du genre *Lactobacillus spp., Bifidobacterium spp., Streptococcus spp., Lactococcus spp., Leuconostoc spp.* et en particulier *Lactobacillus casei, Lactobacillus plantarum, Lactobacillus bulgaricus, Lactobacillus helveticus, Lactobacillus acidophilus, Lactobacillus fermentum, Lactobacillus rhamnosus, Lactobacillus reuteri, Bifidobacterium animalis, Bifidobacterium breve, Bifidobacterium adolescents, Bifidobacteium infantis, Streptococcus thermophilus, Lactococcus lactis,* ou leur mélange.

Plus particulièrement, les souches bactériennes préférées selon la présente invention sont du genre *Lactobacillus,* ou *Bificlobacterium,* préférentiellement *Lactobacillus plantarum* et encore plus préférentiellement les souches *Lactobacillus plantarum* déposées le 16/03/95 sous le numéro DSM 9843 à la Deutsche Sammlung von Mikroorganismen von Zellkuturen GmbH ou des souches de *Lactobacillus plantarum* déposées le 4/04/02 sous le numéro CNCM I-2845 à la Collection Nationale des Cultures de Microorganismes.

La souche *Lactobacillus Plantarum* déposée le 16/03/95 sous le numéro DSM 9843 à la Deutsche Sammlung von Mikroorganismen von Zellkuturen GmbH est commercialisée par la société PROBI, sous le nom *Lactobacillus plantarum* 299v®. Cette souche possède de nombreux avantages pour une utilisation en tant que probiotique dans un produit alimentaire à base de fruits :

- elle répond aux critères probiotiques fixés par la communauté scientifique.
- elle est brevetée, caractérisée (RAPD, ribotypage) et sa classification est confirmée ;
- elle est GRAS (de l'anglais "Generally Recognized As Safe") ;
- elle est déjà présente à un taux de $10^8$ UFC/ml dans le produit ProViva® distribué par Skanemejerier et est consommée depuis 1994 ;
- elle présente une très bonne survie à pH acide inférieur à 4;
- elle est amylase négative donc ne dégrade pas la texture du produit fini.

Cependant, cette souche a aussi plusieurs inconvénients :

- elle présente un fort potentiel de post acidification
- elle engendre des défauts organoleptiques importants liés à la synthèse d'acide acétique.
- elle dégrade l'acide citrique (e.g jus de citron, jus d'orange) ou l'acide malique (e.g jus de pomme ou de poire) avec production de gaz carbonique d'où des problèmes de gonflement possibles notamment si la chaîne du froid est rompue (c'est à dire dépassement de la température de 8°C).

Cette souche présente donc de nombreux points positifs mais son utilisation pour la fabrication de produits alimentaires ne permet pas d'obtenir une qualité (notamment organoleptique) acceptable du fait de cette production de faux goûts et/ou de gaz.

Il en est de même pour la souche de *Lactobacillus plantarum* déposée le 4/04/02 sous le numéro CNCM I-2845 à la Collection Nationale des Cultures de Microorganismes.

Plus particulièrement, les probiotiques selon la présente invention sont les probiotiques qui produisent des faux goûts et/ou du gaz dans la matrice initiale du produit alimentaire.

Par matrice initiale du produit alimentaire, on entend désigner, selon la présente invention, un produit alimentaire, de préférence du lait, un jus végétal, étant de préférence un jus de fruits ou un jus de légumes ou un jus de fruits ou de légumes reconstitués à base de concentré, sans probiotique, non appauvri en acides organiques, mais comprenant de manière optionnelle d'autres substances telles que par exemple, du sucre, de l'eau, des arômes, des colorants, des édulcorants, des agents anti-oxygène, du lait, des conservateurs, des agents de texture, des protéines d'origine animale (protéines de lait, de lactosérum...) ou végétale (soja, riz...) ou des extraits de végétaux (soja, riz...).

Ainsi par exemple, si le produit alimentaire fabriqué à l'aide du procédé selon la présente invention est à base de jus de fruits, additionné de probiotiques vivants et de monoacide faible protoné, la matrice initiale du produit alimentaire est un jus de fruits.

De même, un autre exemple peut être : si le produit alimentaire fabriqué à l'aide du procédé selon la présente invention est à base de lait, additionné de probiotiques vivants et de monoacide faible protoné, la matrice initiale du produit alimentaire est du lait.

Selon la présente invention, le produit alimentaire est de préférence à base d'une matrice initiale de jus végétal et/ou de lait. Ce produit alimentaire peut être un produit laitier fermenté.

Par « produits laitiers fermentés », on entend plus particulièrement des produits laitiers fermentés prêts à la consommation humaine, c'est-à-dire des aliments laitiers fermentés.

Ici sont plus particulièrement visés par ce terme les laits fermentés et yoghourts. Lesdits aliments laitiers fermentés peuvent alternativement être des fromages blancs ou des petits-suisses.

On donne aux termes « laits fermentés » et « yoghourts » leurs significations usuelles dans le domaine de l'industrie laitière, c'est- à dire des produits qui sont destinés à la consommation humaine, et qui sont issus de la fermentation lactique acidifiante d'un substrat laitier. Ces produits peuvent contenir des ingrédients secondaires tels que fruits, végétaux, sucre, etc. On peut par exemple se reporter au Décret français n°88-1203 du 30 décembre 1988 relatif aux laits fermentés et au yaourt ou yoghourt, publié au Journal Officiel de la République Française du 31 décembre 1988.

On peut également se reporter au « Codex Alimentarius » (préparé par la Commission du Codex Alimentarius sous l'égide de la FAO et de l'OMS, et publié par la Division Information de la FAO, disponible en ligne sur http://www.codexalimentarius.net; cf plus particulièrement le volume 12 du Codex Alimentarius « Normes Codex pour le lait et les produits laitiers», et la norme « CODEX STAN A-1 1(a)-1975 »).

Le terme « lait fermenté » est ainsi réservé ici au produit laitier préparé avec un substrat laitier qui a subi un traitement au moins équivalent à la pasteurisation, ensemencé avec des microorganismes appartenant à l'espèce ou aux espèces caractéristiques de chaque produit. Un « lait fermenté » n'a subi aucun traitement permettant de soustraire un élément constitutif du substrat laitier mis en oeuvre, et notamment n'a pas subi un égouttage du coagulum. La coagulation des « laits fermentés » ne doit pas être obtenue par d'autres moyens que ceux qui résultent de l'activité des microorganismes utilisés.

Le terme « yoghourt » est quant à lui réservé au lait fermenté obtenu, selon les usages locaux et constants, par le développement des bactéries lactiques thermophiles spécifiques dites *Lactobacillus bulgaricus* et *Streptococcus thermophilus,* qui doivent se retrouver vivantes dans le produit fini, à raison d'au moins 10 millions de bactéries par gramme rapportées à la partie lactée.

Dans certains pays, la réglementation autorise l'ajout d'autres bactéries lactiques dans la production de yoghourt, et notamment l'utilisation additionnelle de souches de *Bifidobacterium* et/ou de *Lactobacillus acidophilus* et/ou de *Lactobacillus casei.*

Ces souches lactiques additionnelles sont destinées à conférer au produit fini diverses propriétés, telles que la propriété de favoriser l'équilibre de la flore intestinale, ou de moduler le système immunitaire.

Dans la pratique, le terme « lait fermenté » est donc généralement utilisé pour désigner les laits fermentés autres que yoghourts, et peut prendre, selon les pays, le nom de « Kefir », « Kumiss », « Lassi », « Dahi », « Leben », « Filmjôlk », « Villi », « Acidophilus milk » par exemple.

La quantité d'acide lactique libre contenue dans le substrat laitier fermenté ne doit pas être inférieure à 0,6 g pour 100 g lors de la vente au consommateur, et la teneur en matière protéique apportée à la partie lactée ne doit pas être inférieure à celle d'un lait normal.

La dénomination « fromage blanc » ou « petit-suisse » est, ici réservée à un fromage non affiné, non salé, qui a subi une fermentation par des bactéries lactiques uniquement (pas d'autre fermentation que la fermentation lactique).

La teneur en matière sèche des fromages blancs peut être abaissée jusqu'à 15 g ou 10 g pour 100 g de fromage blanc, selon que leur teneur en matière grasse est 25% supérieure à 20 g, ou au plus égale à 20 g, pour 100 g de fromage blanc, après complète dessiccation. La teneur en matière sèche d'un fromage blanc est comprise entre 13 et 20 %. La teneur en matière sèche d'un petit-suisse quant à elle n'est pas inférieure à 23 g pour 100 g de petit-suisse. Elle est généralement comprise entre 25 et 30 %. Les fromages blancs et petits suisses sont généralement regroupés sous la dénomination « fromages frais » utilisée de manière classique dans le domaine technique de la présente invention.

Par jus végétal, on entend désigner, selon la présente invention, des jus de fruits ou jus de légumes ou jus de fruits ou de légumes reconstitués, à base de concentré, ou des jus extraits de soja, tonyu, riz, avoine, quinoa, châtaigne, amande ou noisette.

Les fruits préférés selon la présente invention sont : poire, fraise, pêche, ananas, raisin, pomme, abricot, orange, banane, mangue, griotte, cerise (sweet), prune, pruneau, mûre, myrtille, framboise, pamplemousse, goyave, kiwi, passion, papaye, citron, coing, baie d'églantier, litchi, grenade, ou melon.

De manière préférée, le jus végétal est du jus de fruits.

Par faux goûts, on entend un goût anormal pour le produit alimentaire. Un faux-goût est désagréable pour le consommateur donc non-recherché. Ainsi, à titre d'exemple on peut citer pour les produits alimentaires fabriqués à l'aide du procédé selon la présente invention, le faux-goût de type « terreux-foin » via la fermentation et l'oxydation du produit, de type « vinaigre » ou de type « phénolique, fumé, gants, médicinal... » via le ferment à partir d'acides organiques présents dans le produit, et de type « rance » via la présence d'acides gras volatiles.

Le faux-goût de type « terreux-foin » est la conséquence de la présence de composés tels que l'alpha terpineol, l'acetoine, l'inalool, le 4 ethylphenol.

Le faux-goût de type « vinaigre » est la conséquence de la présence d'acide acétique.

Les faux-goûts de type « phénolique, fumé, gants, médicinal... » sont la conséquence de la présence de composés tels que le 3-methoxy-4-hydroxystyrene (4-vinyl guaiacol) et le 4-hydroxystyrene (4-vinyl phénol).

Le faux-goût de type « rance » est la conséquence de la présence de composés tels que l'acide benzoïque, le 2-nonanone, l'acide decanoïque, l'acide octanoïque, l'acide dodecanoïque.

Au sens de la présente invention, des probiotiques qui produisent de faux goûts sont des probiotiques qui, de par leur métabolisme, seront responsables, directement ou indirectement, de la présence d'un ou plusieurs de ces composés choisis parmi l'alpha terpineol, l'acetoine, l'inalool, le 4 E phenol, l'acide acétique, le 3-methoxy-4-hydroxystyrene (4-vinyl guaiacol) et le 4-hydroxystyrene (4-vinyl phénol), l'acide benzoïque, le 2-nonanone, l'acide decanoïque, l'acide octanoïque, l'acide dodecanoïque.

Des notes dites « positives » peuvent également être détectées dans le produit, telles que par exemple des notes de type « orange » ou « fruitée ». Ces goûts n'étant pas désagréables pour le consommateur, ils ne sont pas compris dans les « faux-goûts » selon la présente invention.

La teneur en molécules responsables de "faux-goûts" est mesurée par micro-extraction en phase solide (SPME) associée à un chromatographe en phase gazeuse (CPG) couplé à un spectromètre de masse (SM). Cette méthode a été développée spécifiquement et possède une sensibilité accrue tout en ayant une bonne reproductibilité et une bonne répétabilité. La SPME permet une concentration spécifique des molécules volatiles cibles pour une meilleure quantification et une meilleure identification. La CPG permet la séparation des molécules volatiles selon leur polarité et leur masse molaire et ainsi obtenir des pics correspondants à chaque molécule. La teneur de chaque molécule est exprimée en aire de pic c'est à dire en unité d'absorbance (UA) proportionnelle à leur concentration dans l'échantillon. Enfin, le spectromètre de masse permet d'une part une identification certaine de chaque molécule via leur fragmentation en ions caractéristiques et d'autre part une deuxième quantification des molécules volatiles où la teneur est cette fois exprimée en unité de masse.

Ainsi une méthode pour identifier un probiotique qui produit de faux goûts dans la matrice initiale du produit alimentaire comprend les étapes suivantes :

a) sélectionner la matrice initiale d'intérêt pour le produit alimentaire (par exemple lait et/ou jus végétal)

b) ajouter à cette matrice initiale $10^8$ UFC/ml du probiotique à tester

c) conditionner le produit obtenu à l'étape b) (brique cartonnée type brique de lait, bouteille en plastique...)

d) Après 35 jours, mesurer la présence et/ou la teneur en molécules responsables de "faux-goûts" recherchés, par exemple le 3-methoxy-4-hydroxystyrene (4-vinyl guaiacol) et le 4-hydroxystyrene (4-vinyl phénol) (ou l'un des composés cités ci-dessus) par micro-extraction en phase solide (SPME) associée à un chromatographe en phase gazeuse (CPG) couplé à un spectromètre de masse (SM), tel que défini ci-dessus,

e) de manière optionnelle, faire tester le produit par un panel d'experts en analyse sensorielle qui attribuera une note entre 0 et 3, 0 étant la note pour « aucune présence de faux goût dans le produit testé » et 3 la note pour « présence de faux goût très forte », seuls les produits ayant une note comprise entre 0 et 1 étant acceptables organoleptiquement,

f) identifier les probiotiques qui produisent des faux goûts dans la matrice initiale du produit alimentaire comme ceux ajoutés dans les produits alimentaires pour lesquels on mesure à l'étape d) une présence en molécules responsables de "faux-goûts" recherchés, en particulier le 3-methoxy-4-hydroxystyrene (4-vinyl guaiacol) et le 4-hydroxystyrene (4-vinyl phénol) (ou l'un des composés cités ci-dessus) et/ou ceux ayant une note moyenne comprise entre 1 et 3 au test du panel d'experts en analyse sensorielle de l'étape e).

Par gaz, on entend désigner préférentiellement, selon la présente invention, le $CO_2$.

De même que pour identifier un probiotique qui produit des faux goûts, pour identifier un probiotique qui produit du gaz dans la matrice initiale du produit alimentaire on utilise une méthode comprenant les étapes suivantes :

a) sélectionner la matrice initiale d'intérêt pour le produit alimentaire (par exemple lait et/ou jus végétal)

b) ajouter à cette matrice initiale $10^8$ UFC/ml du probiotique à tester

c) conditionner le produit obtenu à l'étape b) dans un conditionnement déformable (brique cartonnée type brique de lait, bouteille en plastique, pot de yaourt...)

d) Après 35 jours, mesurer la pression dans le conditionnement.

e) de manière optionnelle, faire tester le produit par un panel d'experts connaissant bien ce type de produit qui attribuera une note entre 0 et 5, 0 étant la note pour « aucune présence de déformation du conditionnement » et 5 la note pour « déformation maximale du conditionnement », seuls les produits ayant une note comprise entre 0 et 1 étant acceptables,

f) identifier les probiotiques qui produisent du gaz dans la matrice initiale du produit alimentaire comme ceux ajoutés dans les produits alimentaires pour lesquels on mesure à l'étape d) une pression dans le conditionnement et/ou ceux ayant une note comprise entre 1 et 5 au test du panel d'experts connaissant bien ce type de produit de l'étape e).

Un procédé de mesure de pression tel que celui utilisé à l'étape d) est décrit ci-dessous :

Après ensemencement de *L. plantarum* à forte concentration ($10^8$ UFC/mL) dans un jus de fruits (jus d'orange par exemple), lors de la conservation du produit dans des contenants flexibles hermétiquement fermés par un opercule souple (ex : pot de yaourt, bouteille en carton,..), un dégagement gazeux peut être mis en évidence. Celui-ci peut par exemple être caractérisé par des mesures rhéologiques (mesure de la résistance de l'opercule à l'écrasement par une force longitudinale) ou des mesures de pression en piquant directement au travers de l'opercule avec une seringue couplée à un manomètre.

Par arômes, on entend désigner, au sens de la présente invention, des ingrédients destinés à donner une flaveur (c'est à dire un goût et/ou une odeur) à une denrée alimentaire.

Les arômes sont utilisés dans deux buts technologiques principaux :

- soit ils renforcent la flaveur naturelle du produit alimentaire, ou la restituent partiellement si elle est trop faible (produits ayant perdu une partie de leur goût au cours du procédé de fabrication),
- soit ils remplacent un ingrédient apportant une note aromatique au produit fini (ex : yaourt arôme fraise).

Selon la présente invention, les arômes préférés sont : pomme, orange, fruits rouges, fraise, pêche, abricot, prune, framboise, mure, groseille, citron, agrume, pamplemousse, banane, ananas, kiwi, poire, cerise, noix de coco, fruits de la passion, mangue, figue, rhubarbe, melon, multifruits, fruits exotiques, vanille, chocolat, café, cappuccino.

Par colorants, on entend des substances capables de rendre au produit alimentaire, de renforcer ou de conférer une coloration.

Selon la présente invention, les colorants préférés sont : le bêta carotène, le carmin.

Par édulcorant, on entend des substances capables de mimer le pouvoir sucrant du sucre sans pour autant apporter les calories du sucre.

Selon la présente invention, les édulcorants préférés sont : aspartame, acésulfame K, saccharine, sucralose et cyclamate.

Par agents anti-oxygène, on entend des substances capables d'éviter ou de réduire les phénomènes d'oxydation qui provoquent entré autres le rancissement des matières grasses ou le brunissement des fruits et légumes coupés.

Selon la présente invention, les agents anti-oxygène préférés sont : vitamine E, extrait de romarin.

Par lait, on entend le lait d'origine animale (par exemple vache, chèvre, brebis) ou des laits reconstitués à partir d'ingrédients laitiers.

Par conservateurs, on entend des substances destinées à aider à la conservation en empêchant la présence et le développement de microorganismes indésirables (par exemple : moisissures ou bactéries responsables d'intoxications alimentaires) dans le produit alimentaire final.

Selon la présente invention, les conservateurs préférés sont l'acide sorbique, l'acide ascorbique, et l'anhydride sulfureux.

Par agents de texture, on entend des substances qui permettent d'améliorer la présentation ou la tenue du produit alimentaire final. Les agents de texture peuvent être des émulsifiants, des stabilisants, des épaississants, ou des gélifiants. Ils peuvent être utilisés dans le produit alimentaire selon la présente invention seuls ou en combinaison.

Selon la présente invention, les agents de texture préférés sont : la pectine, la graine de caroube, les carraghénanes, les alginates, la gomme guar, la gomme de xanthane, l'amidon, les mono et diglycérides d'acides gras alimentaires.

Par eau, on entend de manière optionnelle l'eau osmosée. L'eau osmosée permet de limiter la quantité de minéraux présents dans le produit final, les minéraux pouvant être responsables également de faux-goûts.

Le potassium, le chlore, le magnésium et le calcium sont en effet plutôt amers sous différentes formes ($KCl$, $NH_4CL$, $CaCl_2$, acétate de Ca, LiCl, $MgSO_4$...) alors que le sodium, le lithium et le sulfate sont plutôt salés et/ou acides selon la forme sous laquelle ils sont (forme salée : NaCl, $Na_2SO_4$, tartrate de Na ; forme acide : $Na_2NO_3$, acétate de Li ; forme salée et acide : acétate de Na, ascorbate de Na, citrate de Na). Outre ces effets directs sur les qualités sensorielles des produits, ces composés peuvent également avoir un effet « salting out » sur les molécules volatiles responsables de faux goûts de type « fumé, phénolique... » en favorisant leur passage dans la phase vapeur au dessus du produit, augmentant ainsi l'intensité des faux-goûts perçue.

De manière préférée selon l'invention, le produit alimentaire comprend entre 5 et 20 g/l d'acide lactique en tant que monoacide faible alimentaire, encore plus préférentiellement 10 à 20g/l.

Par monoacide faible alimentaire, on entend désigner selon la présente invention, un monoacide faible apte à être consommé. Il s'agit ici de l'acide lactique.

Par monoacide faible protoné, on entend désigner selon la présente invention un monoacide faible dont la fonction acide n'a pas cédé son proton H+.

Un acide faible est un acide qui ne se dissocie pas totalement dans l'eau : lorsqu'un acide faible AH est mis en présence d'eau, la réaction suivante a lieu : AH + H2O <=> A- + H3O+. La réaction n'est pas totale mais équilibrée.

Un acide faible, après avoir cédé un proton H+, se transforme en une base faible.

Un monoacide est un acide qui ne comprend qu'une seule fonction acide.

Le monoacide faible sous forme protonée peut être présent naturellement dans la matrice initiale du produit alimentaire, ou ajouté dans la matrice initiale du produit alimentaire par un procédé selon la présente invention.

L'intérêt d'utiliser des monoacides faibles sous forme protonée est lié à leur activité antibactérienne qui dépend de leur capacité à réduire le pH et de leur capacité à libérer un proton. Cette dernière capacité est fonction du pH du milieu ainsi que de la valeur pKa de l'acide considéré qui est ici l'acide lactique. Quand ils sont sous forme protonée, les monoacides faibles sont liposolubles et ont ainsi la capacité à entrer dans les cellules microbiennes. Une fois à l'intérieur des cellules, ces monoacides faibles se trouvent dans un milieu plus alcalin ; de ce fait, ils relarguent leur proton et induisent une diminution du pH intracellulaire. Cette modification influence le métabolisme bactérien notamment en inhibant de nombreuses activités enzymatiques et forçant la bactérie à utiliser son énergie en expulsant les protons. Ce phénomène est la première raison de la diminution de l'activité bactérienne. De plus, Russel (1992) propose également une explication supplémentaire basée sur l'accumulation intracellulaire d'anions conséquente au premier phénomène (Russell, J. B. 1992. A review: another explanation for the toxicity of fermentation acids at low pH: anion accumulation versus uncoupling. J. Appl. Bacteriol. 73:363-370.)

Le produit alimentaire frais fabriqué à l'aide du procédé selon la présente invention contient de préférence jusqu'à 7,5 g/l d'acide lactique en tant que monoacide faible alimentaire, quelle qu'en soit la forme (protonée ou non).

De manière préférée, le pH du produit alimentaire est compris entre 3,4 et 3,7.

De manière préférée, les valeurs de pH mentionnées selon la présente invention sont pour un produit alimentaire avant conditionnement ou à l'issue de sa fabrication. En effet, il peut être observé dans certains cas, et pour des produits spécifiques tels des yaourts une acidification du produit alimentaire conditionné au cours de sa conservation. Ce phénomène est appelé post-acidification (acidification spécifique de la conservation du produit).

Ainsi, par exemple un produit alimentaire frais à l'issue de sa fabrication, et avant conditionnement présentant un pH de 4,5 peut, après conditionnement, et 30 jours de conservation (préférentiellement entre 4 et 10°C), présenter un pH de 3,9 dû à la post-acidification.

En particulier, le produit alimentaire frais est composé à 80% d'eau. De manière préférée, ce produit alimentaire peut être une boisson, préférentiellement à base de jus de fruits, de jus de fruits reconstitués à base de concentré et/ou de lait.

Selon la présente invention, on peut citer comme jus de fruits, des jus d'orange et notamment le NFC (de l'anglais « Not From Concentrate ») 10-12° Brix et comme jus d'orange reconstitué à base de concentré le FCOJ (de l'anglais « Frozen Concentrate Orange Juice ») à 66° Brix et les autres jus de fruits concentrés entre 10 et 70° Brix.

Selon la présente invention, le produit alimentaire comprend entre 20 et 99,99% de jus de fruits, préférentiellement entre 50 et 99,99% de jus de fruits.

Selon la présente invention, les probiotiques vivants compris dans la produit alimentaire qui produisent de faux goûts et/ou du gaz dans la matrice initiale du produit alimentaire sont des probiotiques qui dégradent des acides organiques choisis dans le groupe comprenant : l'acide malique, l'acide citrique, l'acide tartrique, l'acide pyruvique, l'acide fumarique, et l'acide gluconique.

Plus particulièrement, ces probiotiques ont la capacité de dégrader ces acides organiques en $CO_2$ et/ou en composés générant des faux goûts.

Encore plus particulièrement ces acides organiques sont contenus dans la matrice initiale du produit alimentaire.

Par acides organiques, on entend désigner, selon la présente invention, notamment l'acide malique, l'acide citrique, l'acide tartrique, l'acide pyruvique, l'acide fumarique, ou l'acide gluconique.

Une méthode d'identification des souches qui dégradent des acides organiques peut être telle que montrée dans l'exemple 1.

La présente invention a donc pour objet un procédé de fabrication d'un produit alimentaire tel que décrit précédemment, caractérisé en ce qu'il comprend les étapes suivantes :

a) ajout de 1 à 50 g/l d'acide lactique en tant que monoacide faible alimentaire dans la matrice initiale du produit alimentaires ;
b) mesure du pH du produit obtenu à l'étape a) ;
c) ajustement du pH du produit obtenu à l'étape b) à un pH cible compris entre 3 et 4, de préférence compris entre 3,4 et 4, par ajout d'un acide alimentaire plus fort que le monoacide faible alimentaire ajouté à l'étape a) si le pH mesuré à l'étape b) est supérieur au pH cible ou ajout d'une base alimentaire si le pH mesuré à l'étape b) est inférieur au pH cible : et
d) ajout de probiotiques vivants au produit obtenu à l'étape c),

de sorte que ledit produit alimentaire :

contient de 1 à 20 g/l d'acide lactique protoné [HA] à l'issue de sa fabrication tel que calculé par l'équation suivante :

$$[HA] = [HA]_{Tot} / (1+10^{pH-3,86})$$

où [HA] représente la concentration de monoacide faible protoné alimentaire et $[HA]_{Tot}$ représente la concentration de monoacide faible alimentaire, sous forme protonée et non protonée,
a un pH compris entre 3 et 4 et
est conservé à une température comprise entre 0 et 15°C, préférentiellement entre 4 et 10°C.

Selon le procédé de la présente invention, à l'étape d) on ajoute entre $5.10^5$ et $10^9$ UFC/ml de probiotiques vivants, préférentiellement entre $0,5.10^8$ et $1,5.10^8$ UFC/ml de probiotiques vivants, encore plus préférentiellement $10^8$ UFC/ml.

De manière préférée selon l'invention, on ajoute à l'étape a) entre 5 et 50 g/l d'acide lactique en tant que monoacide faible alimentaire.

Par monoacide faible alimentaire, on entend désigner, selon la présente invention, un monoacide faible apte à être consommé. Il s'agit ici de l'acide lactique.

Le produit alimentaire fabriqué à l'aide du procédé selon la présente invention comprend d'acide lactique sous forme protonée. Le pourcentage de forme protonée dans une quantité donnée d'acide lactique en tant que monoacide faible dépend du pH du produit dans lequel il se trouve.

De manière générale, la concentration d'acide lactique en tant que monoacide faible dans l'état protoné est corrélée à la valeur du pH, selon la formule suivante :

$$pH = pKa + \log_{10} [A\text{-}] / [HA],$$

où
[A-] est la concentration de la base et [HA] la concentration de la forme protonée de l'acide conjugué.

Ces concentrations sont facilement mesurables par un homme du métier par des techniques de routine (par exemple par HPLC).

Ainsi par exemple, pour obtenir 1 g/L d'acide lactique protoné, il faut initialement:

- 1,1 g/L (13 mmol/L) d'acide lactique à pH 3
- 2,4 g/L (26 mmol/L) d'acide lactique à pH 4.

De ce fait, dans le procédé selon la présente invention, pour obtenir un produit alimentaire comprenant entre 1 et 20 g/l, de préférence plus de 2,2 g/l et jusqu'à 20 g/l, d'acide lactique protoné, il faudra ajouter à la matrice initiale du produit alimentaire une quantité d'acide lactique de supérieure ou égale à la quantité d'acide lactique protonée souhaitée dans le produit alimentaire, soit entre 1 et 50 g/l d'acide lactique en tant que monoacide faible.

En effet, par exemple, pour obtenir 20 g/L (222 mmol/L) d'acide lactique protoné, il faut initialement :

- 23 g/L (253 mmol/L) d'acide lactique à pH 3
- 47 g/L (529 mmol/L) d'acide lactique à pH 4.

Par acide alimentaire, on entend désigner, selon la présente invention, un acide apte à être consommé. Selon la présente invention, et de manière préférée, l'acide alimentaire est un acide organique, préférentiellement un acide choisi parmi l'acide orthophosphorique, l'acide citrique, en particulier l'acide citrique monohydraté, l'acide ascorbique et l'acide malique ou leurs mélanges. De manière plus préférée, l'acide alimentaire choisi est l'acide orthophosphorique. Ces acides sont, bien entendu, tous « food grade ».

Par base alimentaire, on entend désigner selon la présente invention une base apte à être consommée. Selon la présente invention, et de manière préférée, la base alimentaire est choisie parmi NaOH, et des sels, plus particulièrement choisis parmi citrate d'ammonium, citrate de calcium, citrate de sodium, sels de potassium, tricalcium dicitrate, et tampon phosphate.

Selon la présente invention, le pH cible est de préférence supérieur à 3,4 et va jusqu'à 4, avec des valeurs encore préférées comprises entre 3,4 et 3,7. Une marge d'erreur du pH par rapport au pH cible de 0,1 est acceptable selon la présente invention.

**EXEMPLES :**

**EXEMPLE 1 :** Formation de gaz par les souches *L. plantarum* DSM 9843 et *L. plantarum* I-2845 (déposée à la CNCM le 4/04/02) en fonction du jus de fruits inoculé.

I Matériel et Méthodes :

*I.1. Préparation des suspensions bactériennes et inoculation des jus de fruits*

Une première préculture de 2 mL avec les souches DSM 9844 et I-2845 est réalisée. Cette préculture sert à ensemencer à 1% 100 mL de MRS neutre (soit $10^8$-$10^9$ ufc/mL). A partir de cette deuxième préculture 3x 1 000 mL en MRS neutre (soit $10^8$-$10^9$ ufc/mL) sont ensemencés.

Pour chaque souche, les centrifugations (Beckman JA-25, rotor JA-10) sont réalisées avec les pots de 500 mL de la façon suivante :

- remplissage de 6 pots avec 330 mL de culture
- centrifugation de 10 min, 12 000 g, 20°C
- élimination du surnageant et addition de 165 mL de culture
- centrifugation de 10 min, 12 000 g, 20°C
- élimination du surnageant

Chaque culot obtenu est ensuite repris séparément dans le jus de fruit à tester et la suspension obtenue est remise dans la brique de jus de fruit qui est soigneusement refermée ensuite.

*I.2. Dosages des acides organiques.*

La technique retenue consiste à séparer les acides organiques par chromatographie d'échanges d'anions haute performance (HPAEC). La détection des acides organiques est réalisée par conductimétrie suppressive (SCD).
Le système chromatographique utilisé est de marque DIONEX (type DX600) comprenant un système de détection par conductimétrie suppressive. La cellule de conductimétrie thermostatée (type DS3) est couplée à un système d'auto-suppression externe ASRS-ULTRA (4mm). Ce suppresseur électrolytique a été utilisé avec un mode de recirculation d'eau Milli-Q à contre-courant, à un débit de 4 mL/min (pression de 15 psi environ).
Une colonne d'échange d'anions de type AS11-HC (4mm) est associée à une colonne de garde de type AG11-HC. Le débit d'élution est de 1,5 mL/min.

II Résultats :

*II.1. Numérations bactériennes.*

Des numérations bactériennes sont réalisées lors de la conservation des produits afin d'évaluer la survie de *L. plantarum* dans les matrices jus de fruits.

**Tableau 1 :** Numérations bactériennes de *L. plantarum* lors de la conservation à 10°C des matrices jus de fruits.

| Souche | Temps (j) | Orange | Pomme | Raisin |
|---|---|---|---|---|
| DSM 9843 | J0 | $1,8.10^9$ ufc/mL | $1,7.10^9$ ufc/mL | $9,5.10^8$ ufc/mL |
| | J5 | $5,0.10^9$ ufc/mL | $5,8.10^8$ ufc/mL | $4,1.10^9$ ufc/mL |
| 1-2845 | J0 | $1,1.10^9$ ufc/mL | $9,8.10^8$ ufc/mL | $6,0.10^6$ ufc/mL |
| | J5 | $4,5.10^9$ ufc/mL | $1,6.10^9$ ufc/mL | $3,9.10^9$ ufc/mL |

*II.2. Mise en évidence de la consommation d'acides organiques lors du stockage.*

Les dosages des acides organiques ont été réalisés à 0 et 5 jours au même moment que les numérations et les résultats sont synthétisés dans le tableau 1.

**Tableau 2 :** Métabolites produits et acides organiques consommés lors de la conservation à 10°C de jus de fruit contenant *L. plantarum*.

| | | Lots | Gonflement de la bouteille | pH | Lactate produit | Acétate produit | Malate Consommé | Citrate consommé |
|---|---|---|---|---|---|---|---|---|
| | | | | | mmol | mmol | mmol | mmol |
| Jus de pomme | Témoin | J0 | - | 3,43 | 0,00 | 0,00 | 0,00 | 0,00 |
| | + DSM 9843 | J5 | ++ | 3,38 | 27,93 | 4,44 | 6,72 | 0,21 |
| | + I-2845 | J5 | ++ | 3,39 | 40,86 | 4,38 | 21,20 | 0,19 |
| Jus d'orange | Témoin | J0 | - | 3,34 | 0,00 | 0,00 | 0,00 | 0,00 |
| | + DSM 9843 | J5 | +++ | 3,26 | 53,79 | 25,78 | 11,99 | 4,91 |
| | + I-2845 | J5 | ++ | 3,27 | 48,90 | 15,60 | 13,26 | 1,42 |
| Jus de raisin | Témoin | J0 | - | 3,22 | 0,00 | 0,00 | 0,00 | 0,00 |
| | + DSM 9843 | J5 | ++ | 3,23 | 40,79 | 10,38 | 23,50 | 2,09 |
| | + I-2845 | J5 | +++ | 3,24 | 44,59 | 8,16 | 33,87 | 1,43 |

D'après les résultats présentés dans le tableau 2, il apparaît clairement que l'acide malique est le substrat le plus consommé par *L. plantarum* quelle que soit la souche considérée. Cette consommation s'accompagne, non seulement de productions de lactate et d'acétate et donc d'une baisse sensible du pH (notamment dans les jus d'orange et de pomme), mais aussi d'une production de gaz ayant un effet macroscopique sur l'emballage.

Selon les voies métaboliques présentées sur la figure 1, l'absence de détection de formiate produit (pas d'action de la pyruvate formiate lyase), la très faible teneur en pentoses des jus de fruits traités, le bilan de production de $CO_2$ (exprimé en moles) suivant peut être proposé :

$$CO_2 \text{ total} = \text{malate consommé} + \text{citrate consommé} + (\text{acétate total produit} - \text{acétate issu du citrate})$$

Soit, en remplaçant l'acétate produit à partir du citrate par la quantité de citrate consommé :

$$CO_2 \text{ total} = \text{malate consommé} + \text{acétate total produit}$$

**Conclusion :**

L'acide malique et, dans une moindre mesure, l'acide citrique contribuent donc fortement à la production de gaz lors de la conservation à 10°C de jus de fruits contenant une dose élevée (> $1.10^9$ ufc/mL) de bactérie *L. plantarum* DSM 9843 ou I-2845.

**EXEMPLE 2 :**

*Objectif :* montrer qu'impacter uniquement le pH ne permet pas de diminuer l'activité de *L. plantarum* mise en oeuvre dans un jus de fruit.

Un jus d'orange dilué à 20% est ensemencé pour atteindre une population initiale de $1.10^8$ ufc/mL. On ajoute différents acides ainsi que des mélanges d'acides pour se situer dans une gamme de pH compris entre 3,3 et 3,4.

Après conditionnement en pots de yaourts hermétiquement scellés par un opercule « aluminium », les pots sont conservés à 10°C et le suivi du gonflement (la production de $CO_2$ permettant une visualisation macroscopique de l'activité bactérienne) réalisé.

**Tableau 3 :**

| Type d'acide | pourcentage dans le produit fini pour pH=3,3 | pH | Teneur en monoacide faible protoné (g/l) | gonflement visible des produits conservés à +10°C |
|---|---|---|---|---|
| acide malique | Qsp | 3,37 | / | J+7 |
| acide citrique | Qsp | 3,38 | / | J+7 |
| acide lactique | 0,40% | 3,40 | 3,0 | J+30* |
| acide orthophosphorique | Qsp | 3,30 | / | J+7 |
| acide lactique / acide citrique | 0,30% / 0,15% | 3,40 | 2,2 | J+8 |
| acide lactique / acide citrique | 0,40% / 0,15% | 3,30 | 3,1 | J+15* |
| acide lactique / citrate de sodium | 0,40% / 0,06% | 3,30 | 3,1 | non à J+7* |
| acide lactique | 0,50% | 3,30 | 3,9 | non à J+7* |
| * : perception organoleptique non acceptable pour les consommateurs. | | | | |

Lors de la conservation à 10°C, pour un même pH (3,37-3,40), les cinétiques de gonflement sont plus rapides si le pH est atteint en ajoutant des acides maliques et citriques. Au contraire, la présence d'acide lactique permet d'empêcher ce gonflement. Cependant, l'abaissement du pH du produit à des valeurs proches de 3,3 par de l'acide lactique (ie 0,4-0,5 %), en association ou non avec de l'acide citrique ou du citrate de sodium, n'est pas acceptable par le consommateur car l'impact organoleptique négatif de l'acide lactique est très important (perception très acide, piquant, ...).

Le pH n'est pas le facteur levier pour réduire l'activité métabolique de *L. plantarum* mais l'acide lactique ayant un effet certain, l'impact de la dissociation pH / acidité a été testé dans l'exemple 3.

**EXEMPLE 3 :**

*Objectif* : définir le couple teneur en acide lactique/pH permettant de réduire l'activité métabolique tout en conservant une population bactérienne importante ($>10^8$ ufc/mL).

Matrice : jus d'orange 100% pur jus (pH original = 3,6).

Ajout de l'acide lactique puis, si nécessaire, ajustement du pH par ajout de soude afin d'atteindre la valeur cible.

Ensemencement : 0,015% de souche *L. plantarum* DSM 9843 à $1,4.10^{11}$ ufc/mL dans 100 mL de jus d'orange.

**Tableau 4 :**

| Essai n° | 1 | 2 | 3 | 4* | 5* | 6 | 7 | 8 | 9 | 10 |
|---|---|---|---|---|---|---|---|---|---|---|
| pH | 3,5 | 4,5 | 4 | 4 | 4 | 3,6 | 4,5 | 4 | 4,5 | 3,5 |
| [acide lactique] (g/L) | 10 | 0 | 0 | 5 | 5 | 0 | 5 | 10 | 10 | 5 |
| Teneur en monoacide faible protoné (g/l) | 7 | 0 | 0 | 2,1 | 2,1 | 0 | 0,9 | 4,2 | 1,8 | 3,5 |
| * : répétitions des mêmes conditions. | | | | | | | | | | |

Populations bactériennes initiales : $2,5.10^8$ ufc/mL
Populations bactériennes à J+21 :

Essai n°1 : $2.10^6$ ufc/mL
Essai n°6 : $6.10^7$ ufc/mL => très mauvaises qualités organoleptiques.
Essai n°8 : $4.10^7$ ufc/mL
Essai n°10 : $4,5.10^7$ ufc/mL

Quel que soit le pH initial, les produits ne contenant pas d'acide lactique (Essais n°2, 3 et 6) ont tous gonflé dès J+7. A cette même date, l'essai à pH élevé et faible teneur en acide lactique (essai n°7) a légèrement gonflé. Aucun autre essai n'a gonflé. Ce résultat confirme une fois de plus, que le pH seul n'a pas d'influence sur l'activité métabolique de *L. plantarum.*

A J+21, les essais 1, 4, 5, 8, 9 et 10 n'ont pas gonflé. Pour l'essai n°1, cette absence de gonflement est liée à la faible survie bactérienne (diminution d'un facteur 100 de la population bactérienne). En revanche, dans le cas des autres essais, l'absence de gonflement est concomitante à une bonne survie des bactéries (population encore supérieure à $4.10^7$ ufc/mL). Ceci permet de mettre en évidence l'importance du choix du couple « pH / concentration en acide lactique ».

De l'ensemble de ces essais, un couple pH/teneur en acide lactique cible a pu être défini afin de diminuer l'activité métabolique de *L. plantarum* (cf exemple 4). La dose d'acide lactique cible sera ajustée par ajout d'acide lactique molaire et le pH sera ajusté par de l'acide orthophosphorique molaire. En effet, ce dernier, utilisable dans l'industrie agroalimentaire et efficace pour diminuer rapidement le pH, n'a aucun effet sur la diminution de l'activité métabolique (cf. exemple 2).

**EXEMPLE 4** : première application sur produit laitier à boire aux fruits.

Le but de l'essai est d'évaluer l'impact sur l'activité du *L. plantarum* (population et goût dans le produit) des conditions suivantes :

- pH nominal du produit fini ou abaissé à 3,9 et 3,7 par ajout d'acide orthophosphorique,
- Acidité lactique nominale du produit fini ou augmentée à 5,0 g/l par ajout d'acide lactique.

1. Formule du produit :

**Tableau 5 :**

| Constituants | Pourcentage en masse (%) |
|---|---|
| Lait écrémé | 56,91 |
| Crème 40% de Matières grasses | 2,50 |
| Poudre de lait écrémé | 0,38 |
| Sucre cristallisé | 5,20 |
| Ferments lactiques du yoghourt | 0,01 |
| Préparation de fruits | 15,00 |
| Eau stérile + solutions d'acides stérilisées | 20,00 |
| **TOTAL** | **100,00** |

2. Procédés de préparation :

Le mélange lait écrémé, crème, poudre de lait et sucre est réalisé, pasteurisé, puis mis en fermentation à 38°C par ajout des ferments lactiques.

La fermentation est arrêtée à pH 4,60 par refroidissement à 4°C.

La masse blanche obtenue est ensuite additionnée de préparation de fruits, de solutions d'acides, d'eau stérile et de *L. plantarum* congelé selon le tableau présenté au paragraphe 3.

3. Détails des essais :

Dans le tableau qui suit sont détaillées les caractéristiques des différents mélanges testés pour 1 kilogramme de produit fini.

**Tableau 6 :**

| Numéro du mélange | M1 | M2 | M3 | M4 | M5 | M6 |
|---|---|---|---|---|---|---|
| Quantité de solution d'acide lactique molaire ajoutée (ml) | 0 | 0 | 0 | 4,33 | 4,33 | 4,33 |
| Quantité de solution d'acide phosphorique molaire ajoutée (g) | 0 | 13,8 | 24,3 | 0 | 12,1 | 21,0 |
| pH produit fini | 4,29 | 3,9 | 3,7 | 4,22 | 3,9 | 3,7 |
| Acidité lactique du produit fini | 4,7 | 4,7 | 4,7 | 5,0 | 5,0 | 5,0 |
| Teneur en monoacide faible protoné (g/l) | 1,3 | 2,2 | 2,8 | 1,6 | 2,4 | 3,0 |
| Quantité de *L. plantarum* ajoutée (g) | 1 | 1 | 1 | 1 | 1 | 1 |
| Population initiale en *L. plantarum* (ufc/g) | $1.10^8$ | $1.10^8$ | $1.10^8$ | $1.10^8$ | $1.10^8$ | $1.10^8$ |

4. Evolution et évaluation des produits au cours de leur durée de vie.

Dans le tableau 7 qui suit sont détaillées les caractéristiques des différents mélanges testés au cours de leur vieillissement à une température de stockage de 10°C.

**Tableau 7 :**

| Numéro du mélange | M1 | M2 | M3 | M4 | M5 | M6 |
|---|---|---|---|---|---|---|
| pH J0 | 4,29 | 3,9 | 3,7 | 4,22 | 3,9 | 3,7 |
| pH J+8 jours | 3,53 | 3,40 | 3,33 | 3,51 | 3,45 | 3,37 |
| pH J+28 jours | 3,56 | 3,50 | 3,47 | 3,55 | 3,53 | 3,50 |
| pH J+ 35 jours | 3,52 | 3,46 | 3,44 | 3,54 | 3,47 | 3,46 |
| Population en *L. plantarum* initiale (ufc/g) | $1.10^8$ | $1.10^8$ | $1.10^8$ | $1.10^8$ | $1.10^8$ | $1.10^8$ |
| Population en *L. plantarum* à J+21 jours (ufc/g) | $21.10^8$ | $15.10^8$ | $11.10^8$ | $15.10^8$ | $8,8.10^8$ | $7,8.10^8$ |
| Evaluation visuelle du gonflement des pots à J+21 jours Note de 0=absence à 5=maxi | 5 | 4 | 3 | 3 | 2 | 1 |
| Evaluation de l'odeur caractéristique de l'activité du *L. plantarum* à J+21 Note de 0=absence à 3=maxi | 3 | 2 | 1 | 2 | 1 | 0,5 |
| Evaluation du goût caractéristique de l'activité du *L. plantarum* à J+21 Note de 0=absence à 3=maxi | 3 | 2 | 1 | 2 | 1 | 0,5 |

5. Conclusions :

Pour une même teneur en acide lactique, la croissance bactérienne de *L. plantarum* est diminuée par un abaissement du pH.

Pour une même valeur de pH, la croissance bactérienne de *L. plantarum* est diminuée par une augmentation de la teneur en acide lactique.

Au minimum cette croissance bactérienne est de 0,8 log.

Pour toutes les conditions de pH et d'acidité lactique testées, le pH du produit fini à 35 jours est compris entre 3,44 et 3,54. De ce fait, il peut être intéressant de se placer directement dans cette zone de pH dès la fabrication du produit. C'est ce qui a été testé à l'exemple 5 avec la comparaison des résultats obtenus à pH 3,7 et 3,45.

**EXEMPLE 5 :** Seconde application sur produit laitier à boire aux fruits.

Suite à l'essai décrit dans l'exemple 4, un nouvel essai est réalisé afin d'évaluer l'impact sur l'activité du *L. plantarum* (population et goût dans le produit) des conditions modifiées suivantes :

- pH du produit fini abaissé à 3,7 et 3,45 par ajout d'acide orthophosphorique,
- Acidité lactique nominale (5,4g/l) du produit fini ou augmentée à 7,5 g/l par ajout d'acide lactique.

1. Formule du produit :

**Tableau 8**

| Constituants | Pourcentage en masse (%) |
|---|---|
| Lait écrémé | 54,76 |
| Crème 40% de Matières grasses | 2,49 |
| Poudre de lait écrémé | 0,59 |
| Sucre cristallisé | 7,15 |
| Ferments lactiques du yoghourt | 0,01 |
| Préparation de fruits | 15,00 |
| Eau stérile + solutions d'acides stérilisées | 20,00 |
| **TOTAL** | **100,00** |

La teneur en sucre du produit fini a été augmentée de 1,95% pour compenser l'impact de l'acidification du produit sur l'organoleptie.

2. Procédés de préparation :

Le mélange lait écrémé, crème, poudre de lait et sucre est réalisé, pasteurisé, puis mis en fermentation à 38°C par ajout des ferments lactiques.
La fermentation est arrêtée à pH 4,50 par refroidissement à 4°C.
La masse blanche obtenue est ensuite additionnée de préparation de fruits, de solutions d'acides, d'eau stérile et de *L. plantarum* congelé selon le tableau présenté au paragraphe 3.

3. Détails des essais :

Dans le tableau qui suit sont détaillées les caractéristiques des différents mélanges testés pour 1 kilogramme de produit fini.

**Tableau 9 :**

| Numéro du mélange | 1' | 2' | 3' | 4' |
|---|---|---|---|---|
| Quantité de solution d'acide lactique molaire ajoutée (ml) | 0 | 23,85 | 0 | 23,85 |
| Quantité de solution d'acide phosphorique molaire ajoutée (g) | 23,33 | 10,83 | 34,67 | 23,5 |
| pH produit fini | 3,7 | 3,7 | 3,45 | 3,45 |
| Acidité lactique du produit fini (g/l) | 5,4 | 7,5 | 5,4 | 7,5 |
| Teneur en monoacide faible protoné (g/l) | 3,2 | 4,4 | 3,9 | 5,4 |
| Quantité de L. plantarum ajoutée (g) | 1 | 1 | 1 | 1 |
| Population initiale en L. plantarum (ufc/g) | $1.10^8$ | $1.10^8$ | $1.10^8$ | $1.10^8$ |

4. Evolution et évaluation des produits au cours de leur durée de vie.

Dans le tableau qui suit sont détaillées les caractéristiques des différents mélanges testés au cours de leur vieillissement à une température de stockage de 10°C.

**Tableau 10 :**

| Numéro du mélange | 1' | 2' | 3' | 4' |
|---|---|---|---|---|
| pH J0 | 3,7 | 3,7 | 3,45 | 3,45 |
| pH J+8 jours | 3,69 | 3,68 | 3,49 | 3,46 |
| pH J+22 jours | 3,57 | 3,67 | 3,40 | 3,41 |
| pH J+ 29 jours | 3,40 | 3,46 | 3,25 | 3,28 |
| Population en *L. plantarum* initiale (ufc/g) | $1.10^8$ | $1.10^8$ | $1.10^8$ | $1.10^8$ |
| Population en *L. plantarum* à J+22 jours (ufc/g) | $1,2.10^8$ | $1.10^8$ | $0,8.10^8$ | $0,7.10^8$ |
| Population en *L. plantarum* à J+43 jours (ufc/g) | $1,3.10^8$ | $0,7.10^8$ | $0,5.10^8$ | $0,5.10^8$ |
| Evaluation visuelle du gonflement des pots à J+22 jours Note de 0=absence à 5=maxi | 0 | 0 | 0 | 0 |
| Evaluation de l'odeur caractéristique de l'activité du *L. plantarum* à J+22 Note de 0=absence à 3=maxi | 1 | 0,5 | 0 | 0 |
| Evaluation du goût caractéristique de l'activité du *L. plantarum* à J+22 Note de 0=absence à 3=maxi | 1 | 1 | 3 | 0 |

<u>5. Conclusions:</u>

La population en *L. plantarum* au cours du vieillissement du produit est stable (i.e entre $0,5.10^8$ et $1,5.10^8$ ufc/g) pour un pH compris entre 3,45 et 3,7 et à acidité lactique totale comprise entre 5,4 g/l et 7,5 g/l.

L'odeur caractéristique de l'activité du *L. plantarum* n'apparaît pas à pH 3,45 quelle que soit l'acidité lactique. En revanche, cette odeur est faiblement présente dans les produits à pH 3,7 qui restent très acceptables du point de vue du consommateur.

On remarque également que, quand on diminue le pH et que l'on augmente l'acidité lactique du produit, on diminue la survie des probiotiques. De ce fait, diminuer le pH en dessous de 3 et augmenter l'acidité lactique (c'est-à-dire, de manière plus générale, la teneur en monoacide faible quelle que soit sa forme) au dessus de 7,5 g/l, induit une mortalité bactérienne et ainsi une non stabilité du probiotique.

**Revendications**

**1.** Procédé de fabrication d'un produit alimentaire frais comprenant une concentration stable en probiotiques vivants qui produisent des faux goûts et/ou du gaz dans la matrice initiale du produit alimentaire, ledit procédé étant **caractérisé en ce qu'**il comprend les étapes suivantes :

a) ajout de 1 à 50 g/l d'acide lactique en tant que monoacide faible alimentaire dans ladite matrice initiale ;
b) mesure du pH du produit obtenu à l'étape a) ;
c) ajustement du pH du produit obtenu à l'étape b) à un pH cible compris entre 3 et 4, de préférence compris entre 3,4 et 4, de préférence encore compris entre 3,4 et 3,7, par ajout d'un acide alimentaire plus fort que le monoacide faible alimentaire ajouté à l'étape a) si le pH mesuré à l'étape b) est supérieur au pH cible ou ajout d'une base alimentaire si le pH mesuré à l'étape b) est inférieur au pH cible ; et
d) ajout de probiotiques vivants au produit obtenu à l'étape c),

de sorte que ledit produit alimentaire :

contient de 1 à 20 g/l d'acide lactique protoné [HA] à l'issue de sa fabrication tel que calculé par l'équation suivante :

$$[HA] = [HA]_{Tot} / (1+10^{pH-3,86})$$

où [HA] représente la concentration de monoacide faible protoné alimentaire et $[HA]_{Tot}$ représente la concentration de monoacide faible alimentaire, sous forme protonée et non protonée,
a un pH compris entre 3 et 4 et
est conservé à une température comprise entre 0 et 15°C, préférentiellement entre 4 et 10°C.

2. Procédé selon la revendication 1, **caractérisé en ce qu'**à l'étape d) on ajoute une concentration en probiotiques vivants supérieure à $10^5$ UFC/ml, de préférence une concentration entre 0,5 $10^8$ et 1,5 $10^8$ UFC/ml.

3. Procédé selon l'une quelconque des revendications 1 et 2, **caractérisé en ce que** l'acide alimentaire est choisi parmi l'acide orthophosphorique, l'acide citrique, l'acide ascorbique, l'acide malique et leurs mélanges.

4. Procédé selon l'une quelconque des revendications 1 à 3, **caractérisé en ce que** la base alimentaire est choisie parmi NaOH, citrate de sodium, tricalcium dicitrate, un tampon phosphate et un tampon citrate.

5. Procédé selon l'une quelconque des revendications 1 à 4, **caractérisé en ce que** ledit produit alimentaire est une boisson.

6. Procédé selon la revendication 5, **caractérisé en ce que** ladite matrice initiale est un jus végétal tel que du jus de fruits, et/ou un lait.

7. Procédé selon l'une quelconque des revendications 1 à 6, **caractérisé en ce que** lesdits probiotiques sont des souches bactériennes.

8. Procédé selon la revendication 7, **caractérisé en ce que** les souches bactériennes sont du genre *Lactobacillus* ou *Bifidobacterium,* ou leur mélange.

9. Procédé selon la revendication 8, **caractérisé en ce que** les souches bactériennes sont *Lactobacillus plantarum,* de préférence des souches de *Lactobacillus plantarum* déposées le 16/03/95 sous le numéro DSM 9843 à la Deutsche Sammlung von Mikroorganismen von Zellkuturen GmbH ou des souches de *Lactobacillus plantarum* déposées le 4/04/02 sous le numéro CNCM I-2845 à la Collection Nationale des Cultures de Microorganismes.

10. Procédé selon l'une quelconque des revendications 7 à 9, **caractérisé en ce que** la concentration en bactéries dans ledit produit alimentaire est supérieure à $10^5$ UFC/ml, de préférence supérieure à $0,5.10^8$ UFC/ml.

11. Procédé selon l'une quelconque des revendications 1 à 10, **caractérisé en ce qu'**on ajoute à l'étape a) entre 5 et 50 g/L d'acide lactique en tant que monoacide faible alimentaire.

12. Procédé selon l'une quelconque des revendications 1 à 11, **caractérisé en ce que** le produit alimentaire frais contient jusqu'à 7,5 g/L d'acide lactique en tant que monoacide faible alimentaire.

13. Procédé selon l'une quelconque des revendications 1 à 12, **caractérisé en ce que** le pH cible est compris entre 3,4 et 3,7.

**Patentansprüche**

1. Verfahren zur Herstellung eines frischen Lebensmittelprodukts, umfassend eine stabile Konzentration von lebenden Probiotika, die falsche Geschmacksrichtungen und/oder Gas in der Ausgangsmatrix des Lebensmittelprodukts erzeugen, wobei das Verfahren **dadurch gekennzeichnet ist, dass** es die folgenden Schritte umfasst:

a) Zugeben von 1 bis 50 g/l Milchsäure als schwache Lebensmittel-Monosäure in die Ausgangsmatrix;
b) Messen des pH des in Schritt a) erhaltenen Produkts;
c) Einstellen des pH des in Schritt b) erhaltenen Produkts auf einen Ziel-pH, der zwischen 3 und 4, vorzugsweise zwischen 3,4 und 4, vorzugsweise zwischen 3,4 und 3,7 liegt, durch Zugabe einer Lebensmittelsäure, die stärker als die schwache Lebensmittel-Monosäure ist, die in Schritt a) zugegeben wurde, wenn der in Schritt b) gemessene pH höher als der Ziel-pH ist, oder Zugeben einer Lebensmittelbase, wenn der in Schritt b) gemessene pH niedriger als der Ziel-pH ist; und
d) Zugeben von lebenden Probiotika zu dem in Schritt c) erhaltene Produkt, so dass das Lebensmittelprodukt:

von 1 bis 20 g/l protonierter Milchsäure [HA] am Ausgang seiner Herstellung enthält, wie durch die folgende Gleichung berechnet:

$$[HA] = [HA]_{Tot} / (1+10^{pH-3,86})$$

wobei [HA] die Konzentration der schwach protonierten Lebensmittel-Monosäure darstellt und $[HA]_{Tot}$ die Konzentration der schwachen Lebensmittel-Monosäure in protonierter Form und nicht protonierter Form ein pH hat, der zwischen 3 und 4 liegt, und

bei einer Temperatur aufbewahrt ist, die zwischen 0 und 15 °C liegt, vorzugsweise zwischen 4 und 10 °C.

2. Verfahren nach Anspruch 1, **dadurch gekennzeichnet, dass** in Schritt d) eine Konzentration aus lebenden Probiotika von mehr als $10^5$ KBE/ml und vorzugsweise eine Konzentration zwischen $0,5 \cdot 10^8$ und $1,5 \cdot 10^8$ KBE/ml zugegeben wird.

3. Verfahren nach einem der Ansprüche 1 und 2, **dadurch gekennzeichnet, dass** die Lebensmittelsäure ausgewählt ist aus der Orthophosphorsäure, der Zitronensäure, der Ascorbinsäure, der Äpfelsäure und Mischungen davon.

4. Verfahren nach einem der Ansprüche 1 bis 3, **dadurch gekennzeichnet, dass** die Lebensmittelbase ausgewählt ist aus NaOH, Natriumcitrat, Tricalciumdicitrat, einem Phosphatpuffer und einem Citratpuffer.

5. Verfahren nach einem der Ansprüche 1 bis 4, **dadurch gekennzeichnet, dass** das Lebensmittelprodukt ein Getränk ist.

6. Verfahren nach Anspruch 5, **dadurch gekennzeichnet, dass** die Ausgangsmatrix ein pflanzlicher Saft wie z.B. Fruchtsaft und/oder Milch ist.

7. Verfahren nach einem der Ansprüche 1 bis 6, **dadurch gekennzeichnet, dass** die Probiotika Bakterienstämme sind.

8. Verfahren nach Anspruch 7, **dadurch gekennzeichnet, dass** die Bakterienstämme der Gattung *Lactobacillus* oder *Bifidobacterium* oder deren Mischung sind.

9. Verfahren nach Anspruch 8, **dadurch gekennzeichnet, dass** die Bakterienstämme *Lactobacillus plantarum* sind, vorzugsweise *Lactobacillus plantarum*-Stämme, hinterlegt am 16/03/95 unter der Nummer DSM 9843 in der Deutschen Sammlung von Mikroorganismen von Zellkulturen GmbH, oder *Lactobacillus plantarum*-Stämme, hinterlegt am 4/04/02 unter der Nummer CNCM I-2845 in der Collection Nationale des Cultures de Microorganismes.

10. Verfahren nach einem der Ansprüche 7 bis 9, **dadurch gekennzeichnet, dass** die Bakterienkonzentration in dem Lebensmittelprodukt höher als $10^5$ KBE/ml, vorzugsweise höher als $0,5 \cdot 10^8$ KBE/ml ist.

11. Verfahren nach einem der Ansprüche 1 bis 10, **dadurch gekennzeichnet, dass** in Schritt a) zwischen 5 und 50 g/l Milchsäure als schwache Lebensmittel-Monosäure zugegeben werden.

12. Verfahren nach einem der Ansprüche 1 bis 11, **dadurch gekennzeichnet, dass** das frische Lebensmittelprodukt bis zu 7,5 g/L Milchsäure als schwache Lebensmittel-Monosäure enthält.

13. Verfahren nach einem der Ansprüche 1 bis 12, **dadurch gekennzeichnet, dass** der Ziel-pH zwischen 3,4 und 3,7 liegt.

**Claims**

1. A method for producing a fresh food product comprising a stable concentration of live probiotics which produce false tastes and/or gas in the initial matrix of the food product, said method being **characterized in that** it comprises the following steps:

   a) adding 1-50 g/L of lactic acid as a dietary weak mono-acid in said initial matrix;

b) measuring the pH of the product obtained in step a) ;

c) adjusting the pH of the product obtained in step b) to a target pH comprised between 3 and 4, preferably comprised between 3.4 and 4, more preferably comprised between 3.4 and 3.7, by adding a stronger food acid than the dietary weak mono-acid added in step a) if the pH measured in step b) is larger than the target pH, or adding a food base if the pH measured in step b) is smaller than the target pH; and

d) adding live probiotics to the product obtained in step c),

so that said food product:

contains from 1 to 20 g/L of protonated lactic acid [HA] at the end of its production as calculated by the following equation:

$$[HA] = [HA]_{Tot} / (1 + 10^{pH-3.86})$$

where [HA] represents the concentration of dietary protonated weak mono-acid
and [HA]$_{Tot}$ represents the concentration of dietary weak mono-acid, in protonated and non protonated form, has a pH comprised between 3 and 4 and
is stored at a temperature comprised between 0 and 15°C, preferentially between 4 and 10°C.

2. The method according to claim 1, **characterized in that**, in step d), a concentration of live probiotics above $10^5$ CFU/mL is added, and preferably a concentration between $0.5 \ 10^8$ and $1.5 \ 10^8$ CFU/mL.

3. The method according to any one of claims 1 and 2, **characterized in that** the food acid is selected from orthophosphoric acid, citric acid, ascorbic acid, malic acid and mixtures thereof.

4. The method according to any one of claims 1 to 3, **characterized in that** the food base is selected from NaOH, sodium citrate, tricalcium dicitrate, phosphate buffer and citrate buffer.

5. The method according to any one of claims 1 to 4, **characterized in that** said food product is a drink.

6. The method according to claim 5, **characterized in that** said initial matrix is a vegetable juice such as fruit juice, and/or milk.

7. The method according to any one of claims 1 to 6, **characterized in that** said probiotics are bacterial strains.

8. The method according to claim 7, **characterized in that** the bacterial strains are of the *Lactobacillus* or *Bifidobacterium* genus or mixtures thereof.

9. The method according to claim 8, **characterized in that** said bacterial strains are *Lactobacillus plantarum,* preferably *Lactobacillus plantarum* strains deposited on 16.03.1995 under the number DSM 9843 at the Deutsche Sammlung von Mikroorganismen von Zellkulturen GmbH or *Lactobacillus plantarum* strains deposited on 04.04.2002 under the number CNCM I-2845 at the Collection Nationale des Cultures de Microorganismes.

10. The method according to any one of claims 7 to 9, **characterized in that** the concentration of bacteria in said food product is above $10^5$ CFU/mL, and preferably above $0.5 \ 10^8$ CFU/mL.

11. The method according to any one of claims 1 to 10, **characterized in that**, in step a), between 5 and 50 g/L of lactic acid are added as a dietary weak mono-acid.

12. The method according to any one of claims 1 to 11, **characterized in that** the fresh food product contains up to 7.5 g/L of lactic acid as a dietary weak mono-acid.

13. The method according to any one of claims 1 to 12, **characterized in that** the target pH is between 3.4 and 3.7.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0070972 A
- EP 0113055 A

**Littérature non-brevet citée dans la description**

- **VAN BEEK, S ; PRIEST FG.** Decarboxylation of substituted cinnamic acids by lactic acid bacteria isolated during malt whisky fermentation. *Applied and Environmental Microbiology,* 2000, vol. 66 (12), 5322-8
- **HEGAZI F.Z. ; ABO-ELNAGA I.G.** Dégradation of organic acids by dairy lactic acid bacteria. *Mikrobiologie der Landwirtschaft der Technologie und des Umweltschutzes,* 1980, vol. 135 (3), 212
- **RUSSELL, J. B.** A review: another explanation for the toxicity of fermentation acids at low pH: anion accumulation versus uncoupling. *J. Appl. Bacteriol.,* 1992, vol. 73, 363-370